# EUROPÄISCHE PATENTSCHRIFT

(11) **EP 0 401 325 B1**
(45) Veröffentlichungstag und Bekanntmachung des Hinweises auf die Patenterteilung: **10.03.1993**
(21) Anmeldenummer: 89912871.4
(22) Anmeldetag: 13.11.1989
(51) Int. Cl.: D21G 1/02, F16C 13/00

(54) **WALZE MIT EINEM ROTIERBAREN WALZENMANTEL**
ROLLER WITH ROTARY SHELL
CYLINDRE A BANDAGE ROTATIF

(30) Priorität: 21.12.1988 CH 4724/88
(43) Veröffentlichungstag der Anmeldung: 12.12.1990
(73) Patentinhaber: SULZER-ESCHER WYSS GMBH, D-88183 Ravensburg (DE)
(72) Erfinder: LINK, Christoph, D-7987 Weingarten (DE)
(86) Internationale Anmeldenummer: EP8901355
(87) Internationale Veröffentlichungsnummer: WO9007029

(56) Entgegenhaltungen:
- WO-A-85/01532
- DE-A- 3 340 683
- US-A- 4 376 330

## Beschreibung

### Technisches Gebiet

Die Erfindung betrifft eine Walze mit einem um einen drehfesten Träger rotierbaren und gegenüber dem Träger mit wenigstens einem Stützelement abgestützten Walzenmantel und wenigstens einer Einrichtung im Innern des Walzenmantels zur Erhitzung der Innenseite des Walzenmantels mittels elektrischer Induktion.

Solche Walzen werden vorzugsweise zur Oberflächenbehandlung von Warenbahnen, insbesondere Faserstoffmaterial, z.B. Papier, Pappe, Non-wovens, Textil oder Kunststoff unter gleichzeitiger Druck- und Temperatureinwirkung verwendet. Besonders eignen sich solche Walzen zur Glättung von Papierbahnen in Glättwerken oder Kalandern, wobei durch eine erhöhte Temperatur die Papierfasern leichter plastifizierbar werden und unter Druckeinwirkung ein Glätt- und Glanzeffekt auf der Papieroberfläche erreichbar ist.

Durchbiegungsausgleichwalzen, bei denen der rotierende Walzenmantel gegenüber dem Träger mit wenigstens einem Stützelement abgestützt ist, beispielsweise mit wenigstens einer Druckkammer oder einer Reihe von hydraulischen oder anderen Stützelementen, haben sich als besonders geeignet erwiesen, eine gleichförmige oder mit einem gewünschten Profil einwirkende Anpreßkraft und einen gleichförmigen oder mit einem gewünschten Profil wirkenden Wärmeübergang von der Walzenoberfläche auf die Warenbahn zu erreichen.

Dies ist insbesondere bei großen Walzenbreiten bis in den Bereich von 10 m, wie sie in Papiermaschinen üblich sind, von Vorteil.

### Stand der Technik

Beheizbare Durchbiegungsausgleichwalzen der eingangs genannten Art sind z.B. aus der US-A-4 282 638 bekannt. Bei diesen sind seitlich am Träger Düsen vorgesehen, aus welchen heißes Wärmeträgermedium auf die Walzenmantel-Innenseite gesprüht und der Walzenmantel dabei mittels Prallströmheizung aufgeheizt wird.

Aus der CH-A-577 598 oder US-A-4 282 639 sind andererseits Durchbiegungsausgleichwalzen mit einer Reihe von hydrostatischen Stützelementen bekannt, deren Lagerflächen Lagertaschen aufweisen, die über einen Druckraum von Bohrungen im Träger mit einem erhitzten Hydraulikmedium versorgt werden. Dabei wird die Innenseite des Walzenmantels durch das heiße Hydraulikmittel auf eine vorgesehene Temperatur aufgeheizt.

Nachteilig ist bei diesen bekannten Walzen, daß die Erhitzung des Walzenmantels über ein Wärmeträgermedium vorgenommen wird. Da hierbei praktisch das gesamte Walzen-Innere erhitzt wird, treten erhebliche Wärmeenergie-Verluste auf, und es wird nur ein kleiner Teil der zugeführten Energie zur Erhitzung des Walzenmantels verwendet. Außerdem ist die Aufheizdauer solcher Walzen auf die erforderliche Betriebstemperatur beim Anlauf des Glättwerkes oder Kalanders vielfach zu lang und erlaubt keinen rationellen Betrieb des Glättwerkes.

Weiterhin ist nachteilig, daß die mit diesen Walzen erzielbare Behandlungstemperatur an der Walzenoberfläche begrenzt ist, da die im Walzen-Inneren für die Zuführung des Heizmittels erforderlichen Komponenten sowie das Heizöl selbst nur bis zu einer bestimmten Temperaturgrenze brauchbar sind.

Außerdem entstehen während der Aufheizphase bei solchen Durchbiegungsausgleichwalzen hohe Zugspannungen an der Innenseite des Walzenmantels, welche sogar zum Platzen des Walzenmantels führen können und bisher nicht beseitigt werden konnten.

Statt die Walze von innen zu beheizen, wurde vorgeschlagen, eine auf die Außenoberfläche des Walzenmantels einwirkende Außenheizung vorzusehen. Dabei treten erhebliche Energieverluste auf, und ebenso entstehen Ungleichmäßigkeiten, welche zur Zerstörung des Walzenmantels beim Aufheizen führen können. Besonders empfindlich haben sich hier die in Glättwerken und Kalandern gebräuchlichen Walzen mit Hartgußmänteln erwiesen, bei denen sich, durch den Herstellungsprozeß bedingt, in der Außenhaut bereits ein bestimmter Eigenspannungszustand einstellt.

Des weiteren wird in der US-PS 4 376 330 eine Walze beschrieben, bei der die Innenseite des Walzenmantels mittels elektrischer Induktion erhitzt wird. Bei der dabei gewählten Induktionsspulenanordnung kann allerdings im Betrieb kein geringer, konstanter Abstand zur Innenseite des Walzenmantels gewährleistet werden, so daß es zu ungleichmäßiger Erhitzung kommt.

### Darstellung der Erfindung

Die Erfindung setzt sich die Aufgabe, die vorstehend erwähnten Nachteile des Standes der Technik zu eliminieren und insbesondere eine Walze der eingangs genannten Art zu schaffen, bei welcher die Energieverluste herabgesetzt sind, die Aufheizzeiten verkürzt sind, eine Verbesserung des Wirkungsgrades erreichbar ist, und bei der die Gefahr einer Beschädigung oder Zerstörung des Walzenmantels beim Aufheizen oder während des Betriebes vermindert ist.

Erfindungsgemäß wird diese Aufgabe dadurch gelöst, daß im Inneren des Walzenmantels in der Nähe von dessen Innenfläche wenigstens eine Einrichtung zur Erhitzung der Innenseite des Walzenmantels mittels elektrischer Induktion an wenigstens einem Stützelement oder seitlich am Träger etwa in einer Ebene senkrecht zur Wirkebene des Stützelement vorgesehen ist.

Mit Vorteil wird diese Walze so betrieben, daß der Einrichtung zur Erhitzung der Innenseite des Walzenmantels Energie in einem solchen Masse zugeführt wird, dass die Walzenmantel-Innenseite auf einer bestimmten Betriebstemperatur gehalten wird, bzw. während des Anlauf-Vorganges einen vorgegebenen Temperaturanstieg pro Zeiteinheit nicht überschreitet.

Bei vorteilhaften Weiterbildungen der Erfindung ist zusätzlich an der Aussenseite des Walzenmantels wenigstens eine weitere Einrichtung zur Erhitzung des Walzenmantels mittels elektrischer Induktion vorgesehen. Hiermit kann der Walzenmantel gleichzeitig von innen und von aussen aufgeheizt werden, so dass temperaturinduzierte mechanische Spannungen, welche zur Beschädigung des Walzenmantels führen könnten, weitgehend vermieden werden. Die Steuerung der elektrischen Ströme der innerhalb und ausserhalb der Walze vorgesehenen induktiven Heizvorrichtungen erfolgt mit Vorteil in einem geschlossenen Regelkreis über Temperatursensoren an der Innenseite und an der Aussenseite des Walzenmantels, welche die den Induktionseinrichtungen zugeführte elektrische Energie so steuern, dass die Temperaturdifferenzen zwischen der Innenseite und der Aussenseite des Walzenmantels bestimmte vorgegebene Werte nicht überschreiten.

Als besonders vorteilhafte Weiterbildung hat sich erwiesen, die Einrichtung zur induktiven Erhitzung der Innenseite des Walzenmantels an den Stützelementen der Durchbiegungseinstellwalze vorzusehen. Da die Lagerflächen der Stützelemente im Betrieb einen festen, geringen Abstand von der Lauffläche an der Innenseite des Walzenmantels haben, sind die Abstände der Induktionsspulen von der Walzenmantel-Innenseite ebenfalls konstant, so dass im Betrieb eine gleichmässige Erhitzung des Walzenmantels gewährleistet ist, und durch die denkbar nächste Plazierung am Walzenmantel ein optimaler Wirkungsgrad zu erwarten ist.

Mit Vorteil ist an jedem der Stützelemente eine Induktionsspule vorgesehen, wobei die Hochfrequenz-Induktionsströme der einzelnen Spulen unabhängig von einander steuerbar sind. Die Induktionsspulen können dabei entweder vor dem Einlauf in den Pressspalt angeordnet sein, um. direkt vor dem Spalt die erforderliche Heizleistung zuzuführen, oder aber hinter dem Pressspalt, um die abgeführte Wärmeenergie sofort wieder zu ersetzen.

Die Erfindung benützt die Tatsache, dass mittels induktiver Erhitzung der Walzenmantel-Innenseite die Heizenergie direkt in dem Bauteil, das die Wärme dann an den Prozess weitergibt, konzentriert wird, ohne Energieverluste durch Aufheizung anderer Komponenten. Bei induktiver Beheizung von innen und aussen erfolgt die Nachlieferung von Wärmeenergie praktisch ohne Zeitverzögerung, so dass sich Ungleichmässigkeiten sofort ausregeln lassen.

Bei Anordnung der Induktionsspulen am feststehenden Träger ist es jedoch vorteilhaft, die Spulen in einer zur Pressebene senkrechten Ebene, d.h. quer zur Pressrichtung vorzusehen, da nur an diesen Stellen der bestand des Trägers vom Walzenmantel auch unter Belastung, d.h. bei einer Durchbiegung des Trägers, nahezu konstant bleibt.

### Kurze Beschreibung der Zeichnungen

Die Erfindung wird an Hand der in den Figuren dargestellten Ausführungsbeispiele erläutert. Es zeigen:
Figur 1 eine Walzvorrichtung im Querschnitt, und
Figur 2 eine Walze mit induktiver Innenheizung.

### Wege zur Ausführung der Erfindung

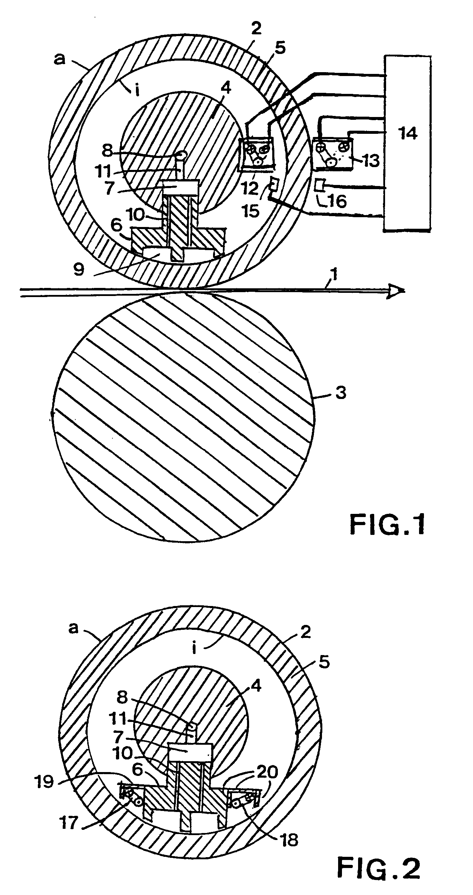

Bei der in Figur 1 dargestellten Walzvorrichtung, beispielsweise einem Glättwerk für eine Papierbahn, übt eine Durchbiegungsausgleichswalze 2 zusammen mit einer Gegenwalze 3 auf die zwischen beiden Walzen hindurchlaufende Warenbahn 1 eine Presskraft aus.

Die Durchbiegungsausgleichswalze 2 kann beispielsweise gemäss US-A-3 802 044 oder US-A-3 885 283 ausgebildet sein und weist einen drehfesten Träger 4 und einen um diesen rotierbaren Walzenmantel 5 auf, der mit einer Reihe von axial nebeneinander angeordneten hydrostatischen Stützelementen 6 gegen den Träger 1 abgestützt ist. Diese Stützelemente 6 weisen eine Kolben/Zylinder-Führung mit einem Druckraum 7 auf, welcher über eine Trägerbohrung 8 über eine Zuleitung 11 mit einem hydraulischen Druckmittel versorgt wird. Auf der Lagerfläche der Stützelemente 6 befinden sich Lagertaschen 9, welche mit Drosselbohrungen 10 vom Druckraum 7 mit Druckmittel versorgt werden und eine hydrostatische Lagerung des Walzenmantels 2 auf den Stützelementen 6 bewirken.

Anstelle der beschriebenen Durchbiegungsausgleichswalze mit hydrostatischen Stützelementen können auch andersartige Durchbiegungsausgleichswalzen verwendet werden, beispielsweise hydrodynamisch oder magnetisch oder mit Druckkissen abgestützte Walzen oder andere bekannte Walzen mit steuerbarer Durchbiegung. Die Gegenwalze 3 kann dabei eine konventionelle Walze oder aber ebenfalls eine Durchbiegungsausgleichswalze sein.

Bei der dargestellten Ausführungsbeispiel ist seitlich am Träger 4 der Durchbiegungsausgleichswalze 2 eine mit hochfrequentem elektrischen Strom versorgbare, aus einer oder mehreren Windungen bestehende Induktionsspule 12 vorgesehen, die auf die Innenseite i des Walzenmantels 5 gerichtet ist, und welche bei Zuführung hochfrequenter elektrischer Energie den Walzenmantel 5 direkt von innen ohne Energieverluste an andere Komponenten erhitzt. Zweckmässig ist es, über die Walzenbreite verteilt mehrere Induktionsspulen nebeneinander vorzusehen.

Um eine möglichst gleichmässige Aufheizung des Walzenmantels 5 und damit eine Spannungsminimierung zu erreichen, kann an der Aussenseite a des Walzenmantels ebenfalls eine analoge induktive Heizvorrichtung 13 vorgesehen sein, wobei beide Heizvorrichtungen 12 und 13 von einer Regeleinrichtung 14 angesteuert sein können, die wiederum Signale von je einem Temperatur-Sensor 15 an der Innenseite i und einem Sensor 16 an der Aussenseite a des Walzenmantels 5 erhält, und welche so ausgebildet ist, dass die Temperatur-Differenz zwischen der Walzenmantel-Innenseite und der Aussenseite einen bestimmten Wert nicht überschreitet und somit eine Beschädigung des Walzenmantels durch unzulässige mechanische Spannungen vermeidet.

Bei der Methode mit induktiver Heizung des Walzenmantels ist es problematisch, eine genaue Abstandstoleranz der Induktionsspulen vom Walzenmantel über über die Walzenbreite sicherzustellen, was zu ungleichmässiger Leistungsübertragung und somit zu ungleicher Oberflächentemperatur führt. Besonders nachteilig ist es, dass der Wirkungsgrad sehr stark vom Abstand der Induktionsspule von der Walze abhängt und dass sehr kleine Abstände auf die beschriebene Weise nicht realisierbar sind, auch wenn die Induktionsspulen seitlich am Träger angebracht sind, wo die Abstandsvariationen am kleinsten sind. Ausserdem ist es erwünscht, die Energie genau dort zuzuführen, wo sie gebraucht wird, d.h. möglichst nahe am Pressspalt.

Bei dem in Figur 2 dargestellten Beispiel einer besonders vorteilhaften Durchbiegungsausgleichswalze 2 werden diese Probleme dadurch gelöst, dass die induktiven Heizvorrichtungen anstatt am Träger 4 an den Stützelementen 6 angebracht ist, und zwar als Induktionsspulen 17 bzw. 18 seitlich auf einem Flansch 19 der Stützelemente 6. Da die Lagerflächen der Stützelemente 6 einen nahezu konstanten Abstand von der Walzenmantelinnenseite i haben, ist damit auch eine optimale Abstandskonstanz der Induktionsspulen 17 und 18 zum Walzenmantel gewährleistet. Dadurch kann der Induktor möglichst nahe am Walzenmantel angeordnet werden und somit die Leistungsübertragung und der Wirkungsgrad deutlich verbessert werden.

Durch entsprechende Abschirmung 20 der Induktionsspulen vom Träger und den Stützelementen kann eine Ueberleitung der Energie auf die benachbarten Bauteile weitgehend vermieden werden.

Eine allfällig erforderliche Kühlung der Induktionsspulen kann durch das ohnehin notwendige Hydraulikmedium erfolgen.

Die Induktoren 17 können unmittelbar vor dem Presspalt vorgehen sein, oder aber stattdessen oder gleichzeitig auch als Spulen 18 unmittelbar nach dem Pressspalt.

Da bei einer Reihe von in Achsenrichtung der Walze nebeneinander angeordneten Stützelementen jedes Stützelement 6 mit einer Induktionsspule 17 bzw. 18 versehen ist, kann die Steuerung der Induktorleistung mit Vorteil zonenweise erfolgen oder mittels einer Regeleinrichtung so geregelt werden, dass die Warenbahn nach Durchgang durch den Pressspalt ein gewünschtes Eigenschaftsprofil über die Breite erhält.

Vorteilhaft bei den beschriebenen Ausführungsbeispielen ist es, dass alle im Induktor entstehenden Verlustleistungen in der Walze freiwerden und so dem Prozess nicht verloren gehen, wie bei der Beheizung einer Walze von aussen.

## Patentansprüche

1. Walze mit einem um einen drehfesten Träger (4) rotierbaren und gegenüber dem Träger mit wenigstens einem Stützelement (6) abgestützten Walzenmantel (5) und wenigstens einer Einrichtung (17, 18) im Inneren des Walzenmantels (5) zur Erhitzung der Innenseite des Walzenmantels (5) mittels elektrischer Induktion,
**dadurch gekennzeichnet**,
daß die Einrichtung (17, 18) zur Erhitzung in der Nähe der Innenfläche (i) des Walzenmantels (5) an wenigstens einem Stützelement (6) vorgesehen ist.

2. Walze nach Anspruch 1,
**dadurch gekennzeichnet**,
daß die Einrichtungen (17, 18) zur Erhitzung am betreffenden Stützelement (6) unmittelbar vor und/oder nach der Wirkebene des Stützelementes (6) angebracht sind.

3. Walze mit einem um einen drehfesten Träger (4) rotierbaren und gegenüber dem Träger mit wenigstens einem Stützelement (6) abgestützten Walzenmantel (5) und wenigstens einer Einrichtung (12) im Inneren des Walzenmantels zur Erhitzung der Innenseite des Walzenmantels (5) mittels elektrischer Induktion,
**dadurch gekennzeichnet**,
daß die Einrichtung (12) zur Erhitzung in der Nähe der Innenfläche (i) des Walzenmantels (5) seitlich am Träger (4) etwa in einer Ebene senkrecht zur Wirkebene des Stützelementes (6) vorgesehen ist.

4. Walze nach einem der Ansprüche 1 bis 3,
**dadurch gekennzeichnet**,
daß in Achsenrichtung der Walze (2) mehrere Stützelemente (6) nebeneinander vorgesehen sind, wobei jedes der Stützelemente (6) eine Einrichtung (12, 17, 18) zur induktiven Erhitzung des Walzenmantels (5) trägt.

5. Walze nach Anspruch 4,
**dadurch gekennzeichnet**,
daß die einzelnen Einrichtungen (12, 17, 18) zur Erhitzung unabhängig voneinander in ihrer Heizleistung steuerbar sind.

6. Walze nach einem der Ansprüche 1 bis 5,
**dadurch gekennzeichnet**,
daß zusätzlich an der Außenseite (a) des Walzenmantels (5) wenigstens eine weitere Einrichtung (13) zur Erhitzung des Walzenmantels (5) mittels elektrischer Induktion vorgesehen ist.

7. Walze nach einem der Ansprüche 1 bis 6,
**dadurch gekennzeichnet**,
daß die Einrichtung (12, 13, 17, 18) zur Erhitzung eine mit hochfrequentem Strom betriebene Induktionsspule aufweist, deren Achse gegen den Walzenmantel (5) gerichtet ist.

## Claims

1. A roller having a roller shell (5) which is rotatable about a non-rotatable carrier (4) and is supported against the carrier with at least one supporting element (6), and at least one means (17, 18) in the interior of the roller shell (5) for heating the inside of the roller shell (5) by means of electrical induction, characterised in that the heating means (17, 18) is provided in the vicinity of the inner surface (i) of the roller shell (5) on at least one supporting element (6).

2. A roller according to Claim 1, characterised in that the heating means (17, 18) are attached to the supporting element (6) in question immediately before and/or after the effective plane of the supporting element (6).

3. A roller having a roller shell (5) which is rotatable about a non-rotatable carrier (4) and is supported against the carrier with at least one supporting element (6), and at least one means (12) in the interior of the roller shell (5) for heating the inside of the roller shell (5) by means of electrical induction, characterised in that the heating means (12) is provided in the vicinity of the inner surface (i) of the roller shell (5) laterally on the carrier (4) approximately in a plane perpendicular to the effective plane of the supporting element (6).

4. A roller according to one of Claims 1 to 3, characterised in that a plurality of supporting elements (6) are provided adjacent to one another in the axial direction of the roller (2), each of the supporting elements (6) having a means (12, 17, 18) for inductive heating of the roller shell (5).

5. A roller according to Claim 4, characterised in that the individual means (12, 17, 18) for heating can be controlled independently of one another in terms of their heating capacity.

6. A roller according to one of Claims 1 to 5, characterised in that at least one additional means (13) for heating the roller shell (5) by means of electrical induction is additionally provided on the outside (a) of the roller shell (5).

7. A roller according to one of Claims 1 to 6, characterised in that the heating means (12, 13, 17, 18) has an induction coil which is operated with a high-frequency current, the axis of which is directed towards the roller shell (5).

## Revendications

1. Cylindre comportant une chemise de cylindre (5) montée rotative autour d'un support (4) non rotatif et appuyée contre le support par au moins un élément d'appui (6), et au moins un dispositif (17, 18) à l'intérieur de la chemise (5) du cylindre pour chauffer la face interne de la chemise (5) par induction électrique, caractérisé en ce que le dispositif de chauffage (17, 18) est prévu à proximité de la face interne (i) de la chemise (5) du cylindre, sur au moins un élément d'appui (6).

2. Cylindre selon la revendication 1, caractérisé en ce que les dispositifs de chauffage (17, 18) sont placés sur les éléments d'appui (6) immédiatement en avant et/ou en arrière du plan d'action de l'élément d'appui (6).

3. Cylindre comportant une chemise de cylindre (5) montée rotative autour d'un support (4) non rotatif et appuyée contre le support par au moins un élément d'appui (6), et au moins un dispositif (12) à l'intérieur de la chemise (5) du cylindre pour chauffer la face interne de la chemise (5) par induction électrique, caractérisé en ce que le dispositif de chauffage (12) est prévu à proximité de la face interne (i) de la chemise (5) du cylindre, latéralement sur le support (4) et sensiblement dans un plan perpendiculaire au plan d'action de l'élément d'appui (6).

4. Cylindre selon une des revendications 1 à 3, caractérisé en ce que plusieurs éléments d'appui (6) sont prévus côte-à-côte dans le sens de l'axe du cylindre (2), chacun des éléments d'appui (6) portant un dispositif (12, 17, 18) pour le chauffage inductif de la chemise (5) du cylindre.

5. Cylindre selon la revendication 4, caractérisé en ce que chacun des dispositifs de chauffage (12, 17, 18) peut être commandé dans sa puissance de chauffage, indépendamment des autres.

6. Cylindre selon une des revendications 1 à 5, caractérisé en ce qu'il est prévu en outre, sur la face externe (a) de la chemise (5) du cylindre, au moins un autre dispositif (13) pour le chauffage de la chemise (5) du cylindre par induction électrique.

7. Cylindre selon une des revendications 1 à 6, caractérisé en ce que le dispositif de chauffage (12, 13, 17, 18) présente une bobine d'induction alimentée en courant à haute fréquence, dont l'axe est dirigé vers la chemise (5) du cylindre.
